# EUROPEAN PATENT SPECIFICATION

(11) **EP 3 817 513 B1**
(45) Date of publication and mention of the grant of the patent: **18.10.2023**
(21) Application number: 20204510.0
(22) Date of filing: 28.10.2020
(51) Int. Cl.: H05B 45/395, H05B 45/38, H05B 45/46, G05F 1/00

(54) **AUTOMOTIVE LIGHTING DEVICE**
AUTOBELEUCHTUNGSVORRICHTUNG
DISPOSITIF D'ÉCLAIRAGE D'AUTOMOBILE

(30) Priority: 29.10.2019 FR 1912122
(43) Date of publication of application: 05.05.2021
(73) Proprietor: Valeo Vision, 93012 Bobigny Cedex (FR)
(72) Inventor: LOPEZ, Jose-Luis, 93012 BOBIGNY Cedex (FR); SANTAELLA, Juan-Jose, 93012 BOBIGNY Cedex (FR)
(74) Representative: Valeo Visibility

(56) References cited:
- US-A1- 2010 194 294
- US-A1- 2018 049 286
- US-B1- 6 462 523
- Anonymous ET AL: "NCV48220 LDO Regulator", , 30 September 2019 (2019-09-30), XP055772735, Retrieved from the Internet: URL:https://www.onsemi.com/pub/Collateral/ NCV48220-D.PDF

## Description

This invention is related to the field of automotive lighting devices, and more particularly, to the electronic components comprised therein.

In some lighting devices, there is a need of ensuring the correct LEDs biasing even when the battery voltage is low.

This threshold of "low voltage" is being decreased by car manufacturers. A voltage regulator is usually used to ensure a constant voltage in the LEDs and driver, but this voltage regulator usually involves a high dropout voltage. This high dropout voltage determines the minimum low voltage threshold that the system is able to undergo. US2018/049286 A1 discloses an automotive lighting device with a voltage regulator and a battery.

Until now, the solution is not accepting a lower threshold than the one the linear regulator provides.

This invention tries to reduce the dropout of the state of the art linear voltage regulator and therefore the low voltage threshold required for correct LEDs biasing.

The invention provides a solution for these problems by means of an automotive lighting device according to claim 1. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides an automotive lighting device for an automotive vehicle, the automotive lighting device comprising:
- a voltage regulator with a regulator input configured to be electrically fed between a power source and a ground connection, the voltage regulator comprising a regulated voltage output;
- a controlled light group, comprising a light driver with terminals and a plurality of light sources grouped in light source groups, each light source group being connected to one of the terminals;
- a step-up unit comprising a step-up input configured to be electrically fed between the power source and the ground connection, this step-up unit further comprising a step-up output configured to provide a higher voltage than the voltage in the step-up input;
wherein
- the light driver is configured to selectively activate or deactivate current flow in at least one terminal;
- the controlled light group is configured to be fed by the regulated voltage output; and
- the voltage regulator having an auxiliary input being electrically connected to the step-up output.

The step-up unit increases the voltage level at the auxiliary input, so that the voltage dropout caused by the voltage regulator is at least partially compensated by this voltage increase. As a consequence, the net result of the voltage dropout (the difference between the voltage at the output of the voltage regulator compared to the voltage at the input of the voltage regulator) is much lower than in the state-of-the-art devices.

The light sources may be grouped in light source groups or may be individually connected to one of the terminals of the driver. In this last case, the light source group would comprise a single light source.

The step-up unit may be physically arranged in the voltage regulator or outside it.

In some particular embodiments, the step-up unit comprises at least one pulse width modulation generator arranged to commute a semiconductor electronic device, and at least one capacitor arranged in parallel with the semiconductor electronic device.

There are several types of step-up units to increase the voltage between the step-up input and the step-up output. Some of them may include a pulse width modulation element to commute a semiconductor device. In some particular elements, the step-up unit is a charge pump and in other particular elements, the step-up unit is a DC/DC converter. All of these examples are valid for the lighting device of the invention.

The voltage regulator comprises a polarization circuit with at least one semiconductor electronic device and the auxiliary input is arranged to electrically feed the polarization circuit.

The polarization circuit of the voltage regulator is the main cause of the voltage dropout. By feeding this polarization circuit with the raised voltage from the step-up unit, this voltage dropout is compensated, thus achieving a minimum net voltage dropout.

In some particular embodiments, the light driver is located in series with the light sources with respect to the voltage regulator, in such a way that the light driver is arranged between the voltage regulator and the light sources.

This arrangement is a current source arrangement, where the driver receives the current from the voltage regulator and then feeds the light sources.

In some particular embodiments, the light driver is located in series with the light sources with respect to the voltage regulator, in such a way that the light sources are arranged between the voltage regulator and the light driver.

This arrangement is a current sink arrangement, where the driver receives the current from the voltage regulator and then feeds the light sources.

In some particular embodiments, the light driver is a multi-channel driver.

This multi-channel driver is useful when there is a high amount of light sources which need to be controlled.

In some particular embodiments, the voltage regulator is a linear regulator. These voltage regulators provide an accurate control of the voltage amount, following the instructions received from the control driver, which calculates the ideal temperature which provides a suitable voltage output value for the light driver and the light sources.

In some particular embodiments, the light sources are solid-state light sources, such as LEDs.

The term "solid state" refers to light emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/bulbs and long, thin filament wires. They also eliminate filament evaporation, potentially increasing the life span of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas.

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
[Fig 1] shows a general electric scheme of an automotive lighting device according to the invention.
[Fig 2] shows a scheme alternative of another automotive lighting device according to the invention.
[Fig 3a] and [Fig 3b] show a scheme alternative of another automotive lighting device according to the invention.
[Fig 4] shows an automotive lighting device according to the invention installed in an automotive vehicle

In these figures, the following reference numbers have been used:
1 Voltage regulator
11 Regulator input
12 Auxiliary input
13 Regulated voltage output
2 Light sources
3 Step-up unit
31 Step-up input
32 Step-up output
33 Pulse width modulation unit
34 Transistor
35 Capacitor
4 Light driver
40 Light driver terminals
5 Power source
6 Ground connection
10 Automotive lighting device
100 Automotive vehicle

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included.

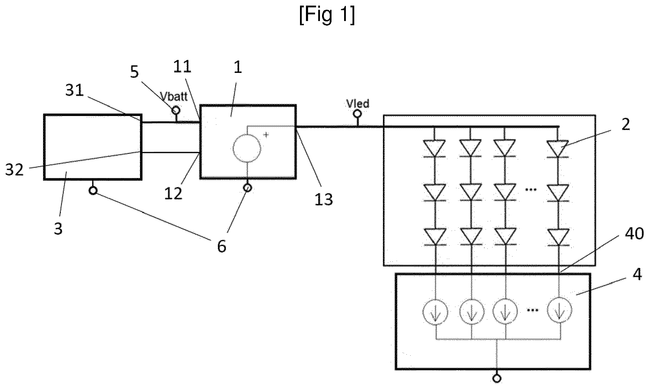

[Fig 1] shows a general electric scheme of an automotive lighting device according to the invention. This automotive lighting device comprises:
- a voltage regulator 1;
- a controlled light group, comprising a light driver 4 with terminals 40 and a plurality of LEDs 2, each LED branch being connected to one of the terminals 40; and
- a step-up unit 3.

The voltage regulator 1 is a linear voltage regulator and comprises a regulator input 11 configured to be electrically fed between a power source 5 and a ground connection 6. The voltage regulator 1 further comprises a regulated voltage output 13, which is arranged to electrically feed the controlled light group.

The step-up unit 3 comprises a step-up input 31 configured to be electrically fed between the power source 5 and the ground connection 6. This step-up unit 3 further comprises a step-up output 32 configured to provide a higher voltage than the voltage in the step-up input 31. Thus, this circuit is in charge of providing a step-up voltage (from the battery voltage) to the voltage regulator 1 in order to get a lower net voltage dropout in this voltage regulator 1. For this aim, the voltage regulator 1 has an auxiliary input 12 which is electrically connected to the step-up output 32.

The voltage regulator 1 is intended to set the voltage at a level enough to bias the LEDs branches and the multichannel, but if no step-up unit 3 was present in the lighting device, a battery voltage with a high enough voltage would be necessary, to compensate the dropout at the voltage regulator 1.

The driver 4 is a multichannel driver, and is in charge of fixing the current through the LEDs 2, being able to selectively activate or deactivate current flow in at least one terminal 40. This driver 4 is also able to provide communication, switching, defect management and recovery management capabilities.

In the embodiment shown in this figure, the light driver 4 is arranged in series with the LEDs 2 with respect to the voltage regulator 1, in such a way that the light driver 4 is arranged between the voltage regulator 1 and the LEDs 2.

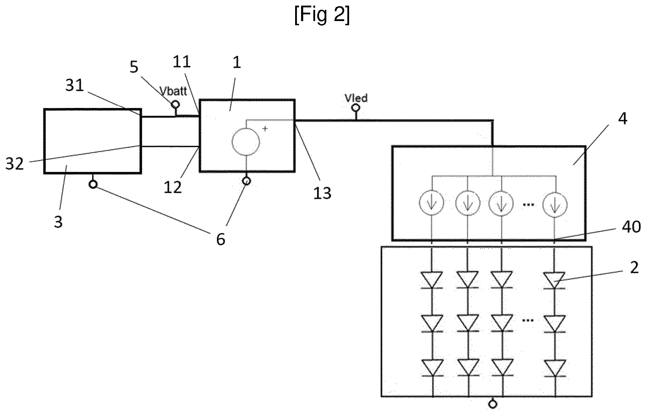

[Fig 2] shows a scheme alternative of a different automotive lighting device according to the invention.

In the embodiment of [Fig 1], the light driver 4 was arranged in series with the light sources 2 with respect to the voltage regulator 1, in such a way that the light driver 4 is arranged between the voltage regulator 1 and the light sources 2.

In this embodiment of [Fig 2], the light driver 4 is arranged in series with the light sources 2 with respect to the voltage regulator 1, in such a way that the light sources 2 are arranged between the voltage regulator 1 and the light driver 4.

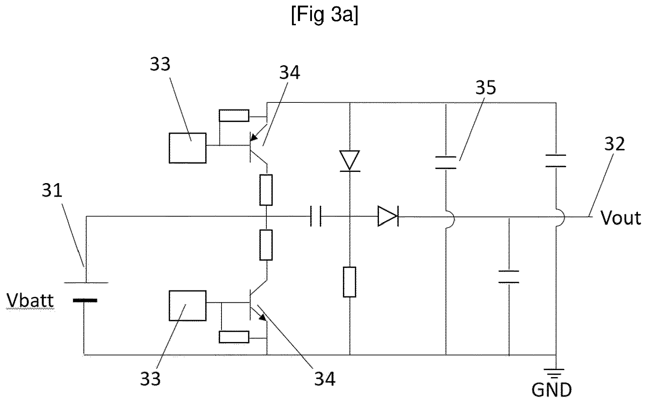

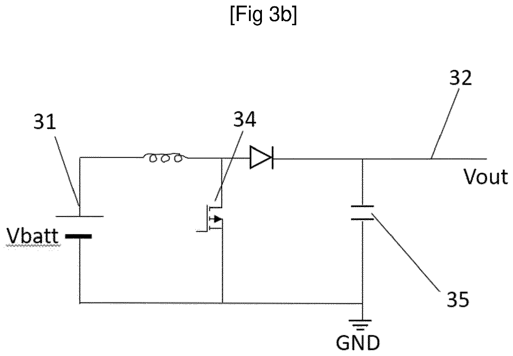

[Fig 3a] and [Fig 3b] show particular examples of a step-up unit 3 included in a lighting device according to the invention.

[Fig 3a] presents an example of charge pump which may be used as a step-up unit 3. This charge pump comprises a pair of pulse width modulation units 33 to commute a pair of transistors 34. The capacitors 35 are arranged in such a way that the voltage in the step-up output 32 is higher than the voltage at the step-up input 31.

[Fig 3b] presents an example of a DC/DC converter which may be used as a step-up unit 3. This DC/DC converter comprises a pulse width modulation unit 33 to commute a MOSFET 34. The capacitor 35 is arranged in such a way that the voltage in the step-up output 32 is higher than the voltage at the step-up input 31.

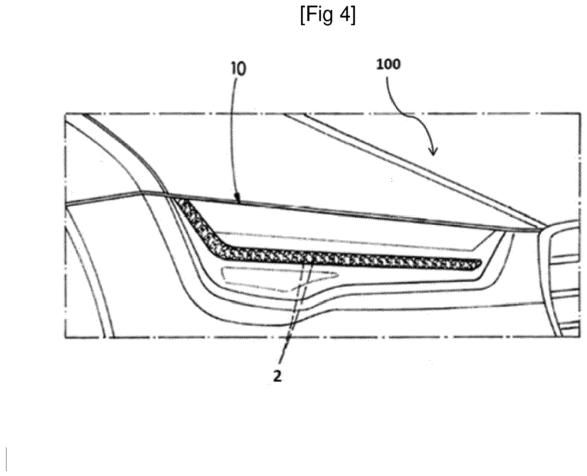

[Fig 4] shows an automotive lighting device 10 according to the invention installed in an automotive vehicle 100.

This automotive lighting device 10 controls the operation of a great amount of LEDs 2 with a minimum battery voltage threshold. As a consequence, the performance of the LEDs 2 may be optimized at a wider range of operation parameters.

## Claims

1. An automotive lighting device (10) for an automotive vehicle (100), the automotive lighting device (10) comprising:
- a voltage regulator (1) comprising a regulator input (11) configured to be electrically fed between a power source (5) and a ground connection (6), the voltage regulator (1) comprising a regulated voltage output (13);
- a controlled light group, comprising a light driver (4) with terminals (40) and a plurality of light sources (2) grouped in light source groups, each light source group being connected to one of the terminals (40);
wherein
- the light driver (4) is configured to selectively activate or deactivate current flow in at least one terminal (40);
- the controlled light group is configured to be fed by the regulated voltage output (13); **characterised in that** the automotive lighting device further comprises:
- a step-up unit (3) comprising a step-up input (31) configured to be electrically fed between the power source (5) and the ground connection (6), the step-up unit (3) further comprising a step-up output (32) configured to provide a higher voltage than a voltage in the step-up input (31); and **in that**
- the voltage regulator (1) having an auxiliary input (12) being electrically connected to the step-up output (32)
wherein the voltage regulator (1) comprises a polarization circuit (14) with at least one semiconductor electronic device and the auxiliary input is arranged to electrically feed the polarization circuit (14).

2. The automotive lighting device (10) according to claim 1, wherein the step-up unit (3) comprises at least one pulse width modulation generator (33) arranged to commute a semiconductor electronic device (34), and at least one capacitor (35) arranged in parallel with the semiconductor electronic device (34).

3. The automotive lighting device (10) according to claim 2, wherein the step-up unit (3) is a charge pump.

4. The automotive lighting device (10) according to claim 2, wherein the step-up unit (3) is a DC/DC converter.

5. The automotive lighting device (10) according to any of the preceding claims, wherein the light driver (4) is located in series with the light sources (2) with respect to the voltage regulator (1), in such a way that the light driver (4) is arranged between the voltage regulator (1) and the plurality of light sources (2).

6. The automotive lighting device (10) according to any of claims 1 to 4, wherein the light driver (4) is located in series with the light sources (2) with respect to the voltage regulator (1), in such a way that the plurality of light sources (2) are arranged between the voltage regulator (1) and the light driver (4).

7. The automotive lighting device (10) according to any of the preceding claims, wherein the light driver (4) is a multi-channel driver.

8. The automotive lighting device (10) according to any of the preceding claims, wherein the voltage regulator (1) is a linear regulator.

9. The automotive lighting device (10) according to any of the preceding claims, wherein the light sources of the plurality of light sources (2) are solid-state light sources, such as LEDs.

## Patentansprüche

1. Automobilbeleuchtungsvorrichtung (10) für ein Kraftfahrzeug (100), wobei die Automobilbeleuchtungsvorrichtung (10) Folgendes umfasst:
einen Spannungsregler (1), umfassend einen Reglereingang (11), dafür ausgelegt, elektrisch zwischen einer Leistungsquelle (5) und einer Masseverbindung (6) gespeist zu werden, wobei der Spannungsregler (1) einen geregelten Spannungsausgang (13) umfasst;
eine gesteuerte Leuchtengruppe, umfassend einen Leuchtentreiber (4) mit Anschlüssen (40) und einer Vielzahl von Lichtquellen (2), die in Lichtquellengruppen gruppiert sind, wobei jede Lichtquellengruppe mit einem der Anschlüsse (40) verbunden ist;
wobei
der Leuchtentreiber (4) ausgelegt ist zum selektiven Aktivieren oder Deaktivieren eines Stromflusses in mindestens einem Anschluss (40);
die gesteuerte Leuchtengruppe dafür ausgelegt ist, durch den geregelten Spannungsausgang (13) gespeist zu werden;
**dadurch gekennzeichnet, dass** die Automobilbeleuchtungsvorrichtung ferner umfasst:
eine Hochsetzeinheit (3), umfassend einen Hochsetzeingang (31), dafür ausgelegt, elektrisch zwischen der Leistungsquelle (5) und der Masseverbindung (6) gespeist zu werden, wobei die Hochsetzeinheit (3) ferner einen Hochsetzausgang (32) umfasst, ausgelegt zum Liefern einer höheren Spannung als eine Spannung an dem Hochsetzeingang (31); und dass
der Spannungsregler (1) einen Hilfseingang (12) aufweist, der elektrisch mit dem Hochsetzausgang (32) verbunden ist,
wobei der Spannungsregler (1) eine Polarisationsschaltung (14) mit mindestens einer elektronischen Halbleitervorrichtung aufweist, und der Hilfseingang eingerichtet ist zum elektrischen Speisen der Polarisationsschaltung (14).

2. Automobilbeleuchtungsvorrichtung (10) nach Anspruch 1, wobei die Hochsetzeinheit (3) mindestens einen Pulsweitenmodulationsgenerator (33), der eingerichtet ist zum Kommutieren einer elektronischen Halbleitervorrichtung (34), und mindestens einen Kondensator (35), der parallel zu der elektronischen Halbleitervorrichtung (34) angeordnet ist, umfasst.

3. Automobilbeleuchtungsvorrichtung (10) nach Anspruch 2, wobei die Hochsetzeinheit (3) eine Ladungspumpe ist.

4. Automobilbeleuchtungsvorrichtung (10) nach Anspruch 2, wobei die Hochsetzeinheit (3) ein DC/DC-Wandler ist.

5. Automobilbeleuchtungsvorrichtung (10) nach einem der vorhergehenden Ansprüche, wobei sich der Leuchtentreiber (4) im Hinblick auf den Spannungsregler (1) in Serie mit den Lichtquellen (2) befindet, derart, dass der Leuchtentreiber (4) zwischen dem Spannungsregler (1) und der Vielzahl von Lichtquellen (2) angeordnet ist.

6. Automobilbeleuchtungsvorrichtung (10) nach einem der Ansprüche 1 bis 4, wobei sich der Leuchtentreiber (4) im Hinblick auf den Spannungsregler (1) in Serie mit den Lichtquellen (2) befindet, derart, dass die Vielzahl von Lichtquellen (2) zwischen dem Spannungsregler (1) und dem Leuchtentreiber (4) angeordnet ist.

7. Automobilbeleuchtungsvorrichtung (10) nach einem der vorhergehenden Ansprüche, wobei der Leuchtentreiber (4) ein Mehrkanaltreiber ist.

8. Automobilbeleuchtungsvorrichtung (10) nach einem der vorhergehenden Ansprüche, wobei der Spannungsregler (1) ein Linearregler ist.

9. Automobilbeleuchtungsvorrichtung (10) nach einem der vorhergehenden Ansprüche, wobei die Lichtquellen aus der Vielzahl von Lichtquellen (2) Festkörperlichtquellen sind, wie etwa LEDs.

## Revendications

1. Dispositif d'éclairage d'automobile (10) pour un véhicule automobile (100), le dispositif d'éclairage d'automobile (10) comprenant :
- un régulateur de tension (1) comprenant une entrée de régulateur (11) configurée pour être alimentée électriquement entre une source d'énergie électrique (5) et une connexion de masse (6), le régulateur de tension (1) comprenant une sortie de tension régulée (13) ; et
- un groupe de lumières commandées, comprenant un moyen de pilotage de lumière (4) avec des bornes (40) et une pluralité de sources de lumière (2) groupées selon des groupes de sources de lumière, chaque groupe de sources de lumière étant connecté à l'une des bornes (40) ;
dans lequel :
- le moyen de pilotage de lumière (4) est configuré pour sélectivement activer ou désactiver une circulation de courant dans au moins une borne (40) ; et
- le groupe de lumières commandées est configuré pour être alimenté par la sortie de tension régulée (13) ;
**caractérisé en ce que** le dispositif d'éclairage d'automobile comprend en outre :
- une unité élévatrice (3) comprenant une entrée élévatrice (31) configurée pour être alimentée électriquement entre la source d'énergie électrique (5) et la connexion de masse (6), l'unité élévatrice (3) comprenant en outre une sortie élévatrice (32) configurée pour fournir une tension plus élevée qu'une tension dans l'entrée élévatrice (31) ; et **en ce que** :
- le régulateur de tension (1) comporte une entrée auxiliaire (12) qui est connectée électriquement à la sortie élévatrice (32) ;
dans lequel le régulateur de tension (1) comprend un circuit de polarisation (14) avec au moins un dispositif électronique semi-conducteur et l'entrée auxiliaire est agencée pour alimenter électriquement le circuit de polarisation (14).

2. Dispositif d'éclairage d'automobile (10) selon la revendication 1, dans lequel l'unité élévatrice (3) comprend au moins un générateur de modulation de largeur d'impulsion (33) agencé pour commuter un dispositif électronique semi-conducteur (34), et au moins un condensateur (35) agencé en parallèle au dispositif électronique semi-conducteur (34).

3. Dispositif d'éclairage d'automobile (10) selon la revendication 2, dans lequel l'unité élévatrice (3) est une pompe de charge.

4. Dispositif d'éclairage d'automobile (10) selon la revendication 2, dans lequel l'unité élévatrice (3) est un convertisseur courant continu/courant continu DC/DC.

5. Dispositif d'éclairage d'automobile (10) selon l'une quelconque des revendications précédentes, dans lequel le moyen de pilotage de lumière (4) est localisé en série avec les sources de lumière (2) par rapport au régulateur de tension (1), de telle sorte que le moyen de pilotage de lumière (4) soit agencé entre le régulateur de tension (1) et la pluralité de sources de lumière (2).

6. Dispositif d'éclairage d'automobile (10) selon l'une quelconque des revendications 1 à 4, dans lequel le moyen de pilotage de lumière (4) est localisé en série avec les sources de lumière (2) par rapport au régulateur de tension (1), de telle sorte que les sources de lumière de la pluralité de sources de lumière (2) soient agencées entre le régulateur de tension (1) et le moyen de pilotage de lumière (4).

7. Dispositif d'éclairage d'automobile (10) selon l'une quelconque des revendications précédentes, dans lequel le moyen de pilotage de lumière (4) est un moyen de pilotage à multiples canaux.

8. Dispositif d'éclairage d'automobile (10) selon l'une quelconque des revendications précédentes, dans lequel le régulateur de tension (1) est un régulateur linéaire.

9. Dispositif d'éclairage d'automobile (10) selon l'une quelconque des revendications précédentes, dans lequel les sources de lumière de la pluralité de sources de lumière (2) sont des sources de lumière à l'état solide, telles que des LED.
